# EUROPEAN PATENT APPLICATION

(11) **EP 2 642 714 A1**
(43) Date of publication of application: **25.09.2013**
(21) Application number: 12250062.2
(22) Date of filing: 19.03.2012
(51) Int. Cl.: H04L 29/06

(54) **Data communication**

(71) Applicant: British Telecommunications Public Limited Company, London EC1A 7AJ (GB)
(72) Inventor: The designation of the inventor has not yet been filed
(74) Representative: Geffen, Nigel Paul

(57) **Abstract**

Methods and apparatus are disclosed for communicating between a first node and a second node across a data network. According to one aspect, the method comprises, at the second node: communicating with the first node via a primary communication flow, data in the primary communication flow being capable of interpretation according to a first communication protocol; receiving data from the first node via a secondary communication flow; identifying in dependence on the secondary communication flow a protocol change indication, the protocol change indication indicating to the second node that data units being sent via the primary communication flow are capable of interpretation according to a second communication protocol different from the first communication protocol; and communicating with the first node via the primary communication flow using the second communication protocol.

## Description

### Technical Field

The present invention relates to data communication. More specifically, aspects of the present invention relate to methods and apparatus for allowing new communication protocols, or new versions of a protocol, to be used.

### Background to the Invention and Prior Art

In the field of data communication, certain new services need new communication protocols or changes to existing communication protocols such as Internet Protocol (IP) and Transmission Control Protocol (TCP). Original or earlier versions of protocols are often designed to allow changes to be made, by including "reserved" values for later use if or when implementing new features, which may be set to a default state in all data units conforming to the protocol concerned until such time as the values are used. Network devices designed or updated after a new version of a protocol has been agreed or brought into use may be operated in such a way as to make use of it. While older devices might not "understand" the new version, properly-implemented network devices (i.e. devices designed to operate in accordance with an applicable standard, or the original or previous version of the protocol) should ignore these "reserved" values (or take a default ("safe") action if they encounter but do not understand them), but many older devices are non-compliant, in that instead of ignoring or allowing use of reserved values in this way, they treat "non-default" values as indicative of a problem or security threat, and take action accordingly. This action may involve removal of the relevant header fields from data units, modification of data associated with them, or dropping of the data units entirely. This makes it difficult to introduce new features.

Many existing communications protocols have been extended with new features, but due to the existence of middleboxes such as Network Address Translation (NAT) devices and firewalls, and other network hardware, such features have been hard to deploy because devices may crash or unpredictably drop data units, with the updated protocol being (unfairly) seen as the cause of the problem. "Selective ACKnowledgement" (SACK), implemented in TCP using the "options" field in the TCP header, has been in use for some time, but some middleboxes still stop it from working, for example.

We start by summarising a few concepts, an understanding of which will assist an understanding of the invention.

### Packets

Data networks usually split the data they carry into small units known as packets. In the internet, one of the most common types of packet consists of a payload that contains the data generated by an application running at the source, encapsulated by a TCP header which ensures the reliable delivery of the data, encapsulated again by an IP header, which attempts to ensure that the data reaches the destination host for which it is aimed. The TCP header includes a unique sequence number (to allow the data to be reconstructed at the destination) and the IP header includes the IP addresses of the source and destination host.

### Data Layering

As described above, packets from one protocol are sent within packets of another protocol. Consider a typical connection over the Internet. Computer A is sending some data to Computer B using the TCP protocol. The data that computer A is sending is first encapsulated into a TCP packet, i.e. the sequence of bytes (the data payload) to be sent has a TCP packet header added to the front. The TCP packet is then encapsulated into an IP packet, i.e. the sequence of bytes being the TCP packet has an IP header added to the front. It is now an IP packet. In turn the IP packet is encapsulated into an Ethernet frame (or similar protocol). Going across the Internet the IP packet may have the Ethernet header (and tail - Ethernet has both unlike IP and TCP) replaced or modified as it is switched and routed to its destination. At Computer B, each header is removed in turn until the original data is passed up to the application. Each header provides information to some part of the Internet to facilitate communication e.g. routing information in the IP packet, sequence numbers in the TCP packet to allow in-order delivery of the data to the application by the network stack of the computer.

### Data Payload Layer Protocols

Some existing protocols place another header into the data payload. This is used for example by the Hypertext Transfer Protocol (HTTP). The payload as passed to TCP will be data to be sent, but with HTTP protocol header at the start of the payload.

### IP and TCP Option Signalling

Both the IP header and the TCP header have space for additional options. The purpose of this is to allow additional information in the packet headers over and above the invariable fields that are needed such as the source and destination addresses and the packet length. The idea of options is that they allow additional flexibility in the way that the protocols are handled by end-systems, routers, etc. Also new options can be defined allowing changes to existing protocols.

A paper entitled "Enabling Renewed Innovation in TCP by Establishing an Isolation Boundary" by Ulmar Kalim, Eric Brown, Mark Gardner and Wu-chun Feng, of Virginia Tech (8th International Workshop on Protocols for Future, Large-Scale and Diverse Network Transports (PFLDNeT), 2010, available online at: http:/lpfld.net/2010/technical.php ) proposes use of option signalling in TCP to establish a boundary point in the TCP data field so that before the boundary, the data is treated as signalling, and after the boundary, it is treated as data. This is one way in which additional signalling may be introduced into the payload of a data flow, but it still suffers the same type of problem as that outlined above, in that unknown options are generally removed by middleboxes.

Various techniques which have previously been proposed, and which may provide at least a partial solution to the above problem, include:
- using the data payload to include such signalling information;
- using IP-in-IP encapsulation in order to ensure that the encapsulated packets are not manipulated by firewalls

The principal problem with these techniques is that there is generally a need for a "bootstrapping" operation to enable payload data to be used in such ways. If one computer doesn't know that it should treat part of the payload as signalling data, it may treat it as application data which could have unforeseen and damaging consequences.

In view of problems such as this bootstrapping problem, preferred embodiments of the invention make use of another communication flow, associated with the main data flow, in a new way, in order to assist the process of communicating or establishing communication between two entities in a manner that avoids problems such as those discussed above that may be caused by non-compliant middle-boxes or other such non-compliant network nodes.

### Summary of the Invention

According to a first aspect, there is provided a method of communicating between a first node and a second node across a data network, the method comprising, at the second node:
communicating with the first node via a primary communication flow, data in said primary communication flow being capable of interpretation according to a first communication protocol;
receiving data from the first node via a secondary communication flow;
identifying in dependence on the secondary communication flow a protocol change indication, the protocol change indication indicating to the second node that data units being sent via the primary communication flow are capable of interpretation according to a second communication protocol different from the first communication protocol; and
communicating with the first node via the primary communication flow using the second communication protocol;
wherein the primary communication flow comprises data units, one or more of said data units comprising:
   - a header portion comprising signalling information according to the first communication protocol; and
   - a payload portion comprising data intended to be communicated across the data network in dependence on the signalling information in the header portion;
and wherein interpretation of data units of the primary communication flow according to the second protocol comprises interpretation of at least a part of the data in the payload portion of data units of the primary communication flow as signalling information in respect of said data units of the primary communication flow.

According to preferred embodiments, interpretation of data units of the primary communication flow according to the first protocol may comprise interpretation of data in the header portion of data units of the primary communication flow as signalling information in dependence on which data units of the primary communication flow may be communicated across the data network.

According to preferred embodiments, interpretation of data units of the primary communication flow according to the second protocol may comprise interpretation of at least a part of the data in the payload portion of data units of the primary communication flow as signalling information in dependence on which data units of the primary communication flow may be communicated across the data network. Alternatively, the signalling information may be for the purposes of signalling, to another entity, data indicative of a characteristic of the primary communication flow, or of one or more data units therein, or of the network as experienced by one or more data units therein, such as congestion on the end-to-end path.

According to preferred embodiments, the second node may be operable to communicate with the first node initially via a primary communication flow, and subsequently to identify a protocol change indication in dependence on a secondary communication flow initiated in respect of data units being sent via the primary communication flow. Generally, therefore, the secondary flow may be initiated after the primary data flow with which it is intended to be associated. Alternatively, however, the flows may be initiated at the same time, or the secondary flow may be initiated before the primary data flow with which it is intended to be associated.

The step of identifying a protocol change indication may be performed in dependence on one data unit of the secondary communication flow. By virtue of this, the second node may need to inspect only the first data packet of each flow in order to determine whether or not it comprises a protocol change indication..

According to certain embodiments, the step of identifying a protocol change indication may comprise determining which port at the second node has been used for a connection request in respect of the secondary communication flow, and identifying the protocol change indication in dependence on the identity of that port. With such embodiments, the use of a particular "well-known port" may thus be taken as the protocol change indication.

According to certain other embodiments, the step of identifying a protocol change indication may comprise identifying the protocol change indication in dependence on a particular relationship between different ports of the first or second nodes used respectively for the primary and secondary communication flows.

According to some preferred embodiments, the step of identifying a protocol change indication may comprise identifying that connection requests in respect of the primary and secondary communication flows, received via different ports of the second node, have been received from the same port or related ports of the first node, and identifying the protocol change indication in dependence on such an identification.

According to other preferred embodiments, the step of identifying a protocol change indication may comprise identifying that connection requests in respect of the primary and secondary communication flows, received via the same port of the second node, have been received from two different ports of the first node, and identifying the protocol change indication in dependence on such an identification.

The first and second communication protocols may be unrelated, but alternatively, they may be different versions of the same generic protocol. The first communication protocol may thus be a first (original, or earlier) version of a particular communication protocol, with the second communication protocol being a second (later, or current) version of the particular communication protocol, different from the first version of the particular communication protocol.

According to preferred embodiments, the first communication protocol may be a transport layer protocol according to which data units have a header portion and a payload portion, such as TCP.

It will be noted that the payload portion of a data unit of the primary communication flow may itself comprise a data unit having a header portion according to a protocol at the same layer as the first protocol. By virtue of this, if the first protocol is IP, for example, the protocol change indication may be an indication to the second node that packets of the primary flow are intended to be interpreted as IP-in-IP packets, for example.

According to a second aspect of the present invention, there is provided apparatus for performing a method according to any of the preceding claims.

The various options and preferred embodiments referred to above in relation to the first aspect are also applicable in relation to the second aspect.

According to preferred embodiments, at about the same time as, shortly after, or possibly before a "primary" data flow is established between two computers A and B, one of the computers also attempts to establish another, "secondary" data flow between the computers. The establishment of the secondary data flow, or the attempt to establish the secondary data flow, is done in such way that the other computer, if suitably-enabled, will recognise it as an indication from the first computer to the second computer that the first computer wishes the second computer to interpret the primary data flow in a different manner to that in which it is normally interpreted, or would be interpreted by a computer that is not suitably-enabled. According to preferred embodiments, this indication is provided in such a way that the primary and secondary flows will not appear, to non-compliant middle-boxes or other non-compliant network nodes on the end-to-end path, to have been sent in accordance with a new protocol or a new version thereof, and will therefore (generally) be forwarded undamaged towards their intended destination in the same manner as those non-compliant network nodes would forward any flows sent in accordance with an existing, original or old protocol or version thereof.

Preferably, if the other computer is, in fact, not suitably-enabled, its functionality will not be affected by the fact that the primary data flow is capable of being interpreted in a different manner, and may not even be aware that an indication to this effect had been provided.

It will be noted that either or both computers may serve as senders and/or receivers of data to and from the other during communication between them. Further, while it will be noted that either may have initiated the establishment of the primary data flow for the purposes of initiating communication with the other, and either may act to attempt to establish the secondary data flow, for the purposes of the following explanation, Computer A will be regarded as the "initiating computer" (at least in respect of the secondary data flow), and Computer B as the "responding computer" (again, at least in respect of the secondary data flow). It will be understood that the roles may of course be reversed, irrespective of which computer is responsible for initiating the initial communication and/or establishing the primary data flow, and irrespective of whether computers A and B are serving as senders, receivers, or both in respect of communications with the other.

Also, while both the "primary" and "secondary" flows do, of course, comprise data, for simplicity, the primary flow will generally be referred to as "the (main) data flow", while the secondary flow will sometimes be referred to as "the indicating flow", in view of its function of providing an indication to the responding computer that the initiating computer may attempt or be attempting to communicate with the responding computer using a different communication protocol.

As the "initiating computer", Computer A may attempt to establish a secondary data flow in one of the following ways, for example:
(i) Connecting to a well-known port.
(ii) Connecting to a port whose number is related to the port number of the data flow, e.g. by a hash function.
(iii) Connecting to the same destination port but using a different, but related, source port number.

Referring to option (iii) above, the second connection may be achieved in exactly the same way as any other connection. Consider an http server, for example. A browser can make multiple connections to a single server to download different pages or even the same page many times. If acting according to one of the preferred embodiments, Computer B may detect that this second connection is, or is at least likely to be, for a secondary, indicating flow in respect of the primary, main data flow. If necessary, Computer B may attempt to confirm this by monitoring the data payload. If it is in a particular format, for example, then it can be confirmed as and construed as a secondary, indicating data flow in respect of the main data flow. Rather than being passed to the application, the data is used either by the network stack or a connection manager depending upon where the new control protocol has been implemented. If the computer isn't updated to recognise the new control protocol, the data payload will be passed to the application. The original application protocol will generally fail to understand this new application protocol and will give an error, so the client end may shut the secondary, indicating flow, as it has served its purpose. It may be important that the data in the payloads of the secondary flow is not treated as data by the application in this case; the data should therefore, preferably, not appear to be meaningful to the application.

In one particular embodiment of the above, for http servers, the new control protocol can be implemented as a new extension to the http protocol. Http servers ignore unknown http extensions, hence any http server residing on a computer that does not implement the new control protocol will ignore the data that has been sent by Computer A in the secondary flow.

Referring to option (iii) above again, Computer A may identify itself as being the originator of the original data flow request (i.e. for the primary, main data flow) by supplying the source IP address and source port and, in the case of the TCP protocol, the TCP sequence numbers for both directions of the data flow. In normal operation the packets sent from Computer A will all be sent with the same source IP address; it only remains for Computer A to identify the original flow with the source port. If Computer A is behind a NAT then it may not know the Source Port as used within the public Internet. In this case it must either discover this information or use an alternative. Computer A can discover its IP address and source port via STUN (Session Traversal Utilities for NAT) or UPnP (Universal Plug and Play). One alternative would be to retransmit the first x bytes of data sent by Computer A.

Computer A does not need prior knowledge of whether computer B will appreciate the reason for or significance of this secondary, indicating flow, or whether it is capable of responding to it as intended. If Computer B is not suitably-enabled, the connection request may temporarily be treated as a separate, unrelated connection request, or may simply fail, and the main data flow will generally continue as normal. The attempt by Computer A to initiate communication using the different, "enhanced" protocol should simply fail, and not have any negative effect on overall performance compared with that which would have been possible using the protocol that Computer B is capable of using. If Computer B can accept the secondary, indicating flow, however, and is suitably-enabled for communication using the different, protocol, it may send an acknowledgement back to Computer A and confirm this. Computer B may then be ready to receive signalling data in some form through the main data flow and the secondary, indicating flow can terminate.

The secondary flow may contain meta-data about the signalling to determine how the main data flow will use signalling. Alternatively signalling could be via a default method. Methods of signalling could be, for example, to treat the first X bytes of the payload as data, a series of key-value pairs where it is not known in advance which keys and how many are to be used or a switch to IP-in-IP encapsulation,. If the computers are capable of handling signalling then they either need to synchronise as to when to start signalling or else the receiving computer inspects received packets to detect whether the main data flow now contains signalling information.

Embodiments of the invention may be implemented in various different ways. They may be implemented in or by virtue of the operating system of one or both of the computers concerned, or in a module separate to the operating system which will be referred to as a "connection manager". In both of these arrangements, the signalling data may be stripped from the payload, while the remainder of the payload may be passed to the application for which it is intended.

### Brief Description of the Drawings

A preferred embodiment of the present invention will now be described with reference to the appended drawings, in which:
**Figure 1** is a schematic diagram of a network showing primary and secondary flows;
**Figure 2** shows a sequences of message that may be exchanged between two computers communicating or establishing communication according to an embodiment of the invention;
**Figure 3** is a flow-chart illustrating steps that may be performed by an initiating computer in order to communicate or establish communication according to an embodiment of the invention; and
**Figure 4** is a flow-chart illustrating steps that may be performed by a responding computer in order to communicate or establish communication according to an embodiment of the invention.

### Description of Preferred Embodiments of the Invention

With reference to the accompanying figures, methods and associated apparatus for communicating or establishing communication according to preferred embodiments will now be described.

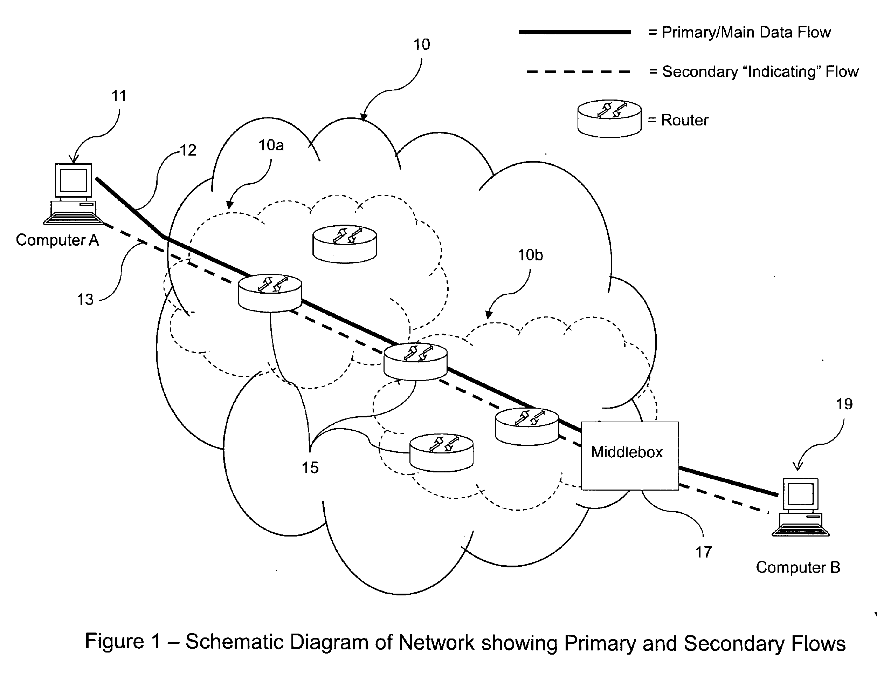

Referring first to **Figure 1****,** this illustrates entities that may be involved in conveying data along a path between two computers 11, 19 or other such devices. As explained above, one of these, Computer A, will be referred to as the initiating computer 11, and the other, Computer B, will be referred to as the responding computer 19. Computers A and B are connected via a network 10, such as the Internet, with several intermediate routers or other network nodes 15. Computer A may simply be acting as a sender of data along an end-to-end path, comprising a primary or "main" data flow 12, with Computer B simply acting as a receiver of that data, but it will be understood that both computers may in fact be performing both the sending and the receiving functions. A secondary flow 13 is also shown, the significance of which will be discussed further later.

There may be a plurality of interconnected networks 10a, 10b, etc. (shown using dashed lines) between Computers A and B, possibly of different types or operated by different network providers or other entities, rather than a single, homogenous, uniformly-controlled network, but for simplicity, this explanation will refer simply to network 10, irrespective of whether the end-to-end path passes through one or more than one autonomous network.

Computers A and B may both be connected to the network 10 through respective network attachment nodes. Computer B is shown as being connected to the network via middle-box 17, which may be or comprise a Network Address Translation (NAT) device, a firewall, or another such device. Data passing between Computers A and B may pass via routers 15 and middle-box 17, or via alternative routes through network 10 or otherwise.

We now consider a situation where Computer A wishes to initiate a communication session with Computer B, and wishes to be able to use an "enhanced signalling" protocol in this communication session, in which some additional signalling information is sent in the payload of the packets of the main data flow. It does not know whether Computer B is aware of this enhanced signalling protocol, or whether it is capable of interpreting data in the payload of packets it may receive in such a way as to obtain signalling information from them. As the communication is to take place over the public Internet, Computer A also does not know whether any network entities such as middle-box 17 on the (or any) path that its data may take on its route from Computer A to Computer B may be sufficiently non-compliant even with existing communication protocols that it will react to any "unrecognised" values in the headers of packets it sees by dropping the packets or taking other action that may prevent them from reaching their intended destination undamaged.

In order to reach Computer B, Computer A must send a sequence of packets to Computer B. These must traverse a number of routers 15 and middle-box 17 (and possibly other middle-boxes) before arriving. The or each middle-box may remove some or all of the signalling information e.g. TCP options from the TCP header.

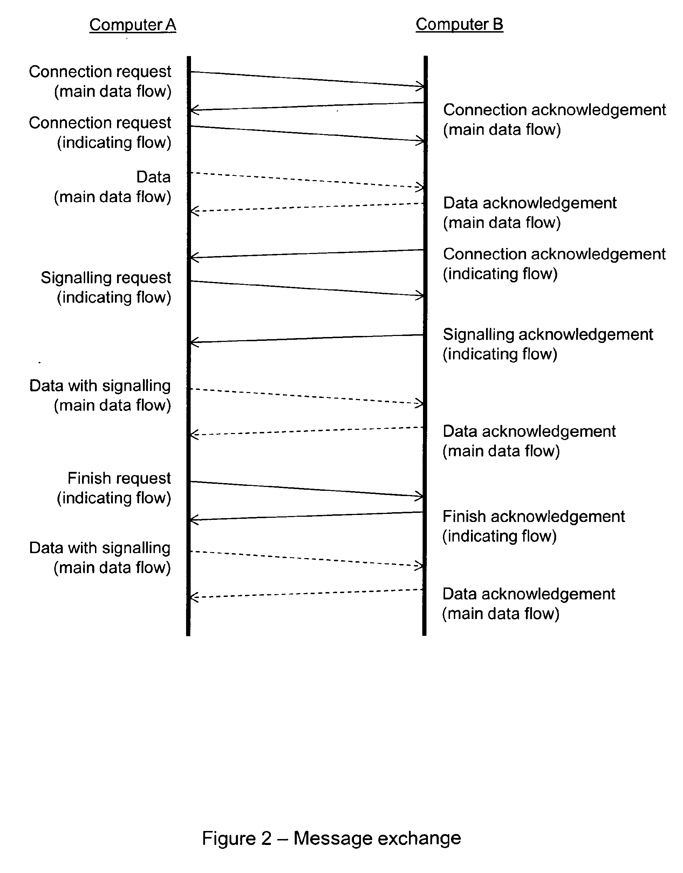

Referring to Figure 2, Computer A starts by sending a connection request to Computer B. If using TCP this is a "TCP SYN" packet, meaning "TCP synchronise". Computer B responds with a connection request acknowledgement ("TCP SYN-ACK"). Not shown in Figure 2 is that with TCP the computer making the connection request should (generally) send an acknowledgement back to the other computer to let it know that it has received the SYN-ACK - this is known as the three-way handshake. In a normal TCP session each side in the communication will now send data packets and acknowledgement packets.

This much may be the same in initiating communication in accordance with embodiments of this invention. The data flow established will be termed the primary or "main" data flow. At any time after the main data flow has been established (or possibly, in alternative embodiments, at the same time or before it has been established), another flow can be started, which, for reasons that will become apparent, may be thought of as an "indicating" flow, and will be referred to as such, or as a secondary flow. Computer A sends another connection request to Computer B, this time using a different source port (many existing protocols will automatically use a new source port for a new connection). This secondary connection request could be on a "well known port" on Computer B, i.e. one agreed on to be available for such connection requests, or could be related to that used for the main data flow e.g. being a hash of the port number used by the main data flow. In the preferred embodiment, the same destination port is used - it is left to Computer B to interpret incoming packets to determine whether they are for the secondary flow or not.

It is important to note that communications sent in this way should not cause problems for computers not implementing an embodiment of the invention, i.e. if Computer A is attempting to initiate communication with Computer B in accordance with a preferred embodiment of the invention, but Computer B is not suitably enabled, sending another connection request to establish a secondary flow should not harm Computer B.

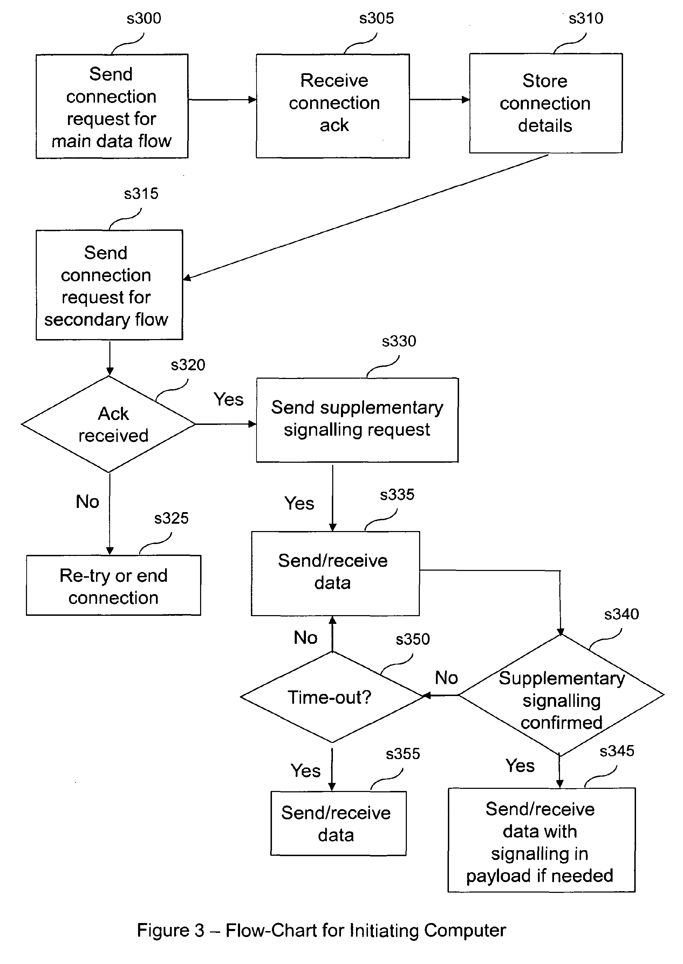

Referring next to Figure 3, which illustrates steps that may be performed by an initiating computer, Computer A initiates the connection request for the main data flow. It must first send a connection request to start a data flow (s300). If/when this has been successfully acknowledged (s305), it stores both initial sequence numbers used by itself and Computer B (s310). Computer A can then request another connection to Computer B using a different source port (s315), and watches for an acknowledgment of this (s320). Note that at this time, it does not need to identify this flow as a secondary flow. If an acknowledgement is received indicating that the second connection request has been successful, then Computer A uses the secondary flow to send a supplementary signalling request (s330) containing source IP address, source port, and both initial sequence numbers of the main data flow. If the second connection request is not successful, then Computer A may re-try, or end the connection (s325). Whilst waiting for a response from Computer B on the indicating flow, Computer A will continue to send and receive packets to Computer B on the main data flow (s335). At the same time Computer B will check whether it has received a confirmation from Computer B that supplementary signalling in the data payload is allowed (s340). If this confirmation has not been received within a specified time period (s350) then it is assumed that Computer B cannot send or receive additional signalling in the payload and Computer A continues to send and receive data packets without additional signalling in the payload (s355). Additionally, in the loop involving steps s335, s340 and s350, in the case of TCP, for example, Computer A could determine a failure to confirm agreement to use supplementary signalling from the receipt of a "reset" or "fin" packet on the indicating flow. If confirmation is received in step s340 then Computer A can start to send packets on the main data flow to Computer B with signalling in the payload if needed and can also start to inspect packets received from Computer B to determine whether additional signalling has been included (s345). Alternatively, Computer A can inspect all packets from Computer B from the start and take the presence of signalling in the payload as confirmation that Computer B is capable of sending and receiving signalling in the data payload.

Not shown in the figure is the use of STUN or UPnP in order to determine the source port used when computer A is behind a NAT. The alternative in this case is to re-send the first X bytes of data instead of source IP address and source port in order to identify which flow this data flow pertains. If/when this request is successfully acknowledged then Computer A can add signalling information into the payload of packets on the data flow. It can also expect to receive signalling information in the payload of packets on the data flow from Computer B.

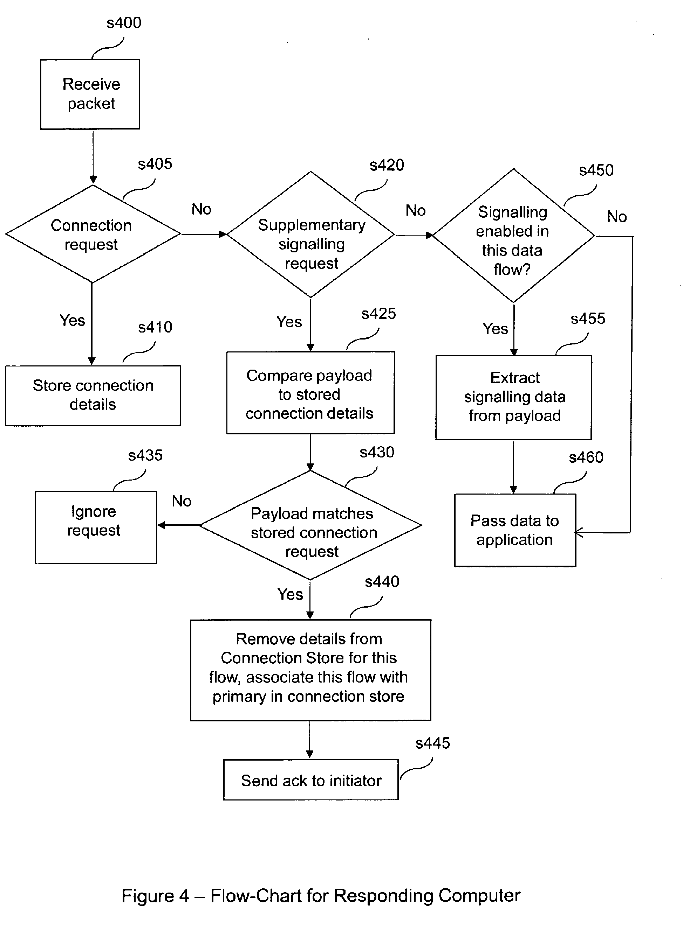

Referring now to **Figure 4****,** which illustrates steps that may be performed by a responding computer, on receipt of a packet (s400), Computer B first checks if it is a connection request (s405). If it is it will store details for that connection request in a connection details store (s410). In the case of TCP this will be the sending IP address and the sending port, and the initial sequence number used by Computer A, and the initial sequence number used by itself (i.e. by Computer B)

Both main data connection requests and supplementary signalling connection requests are handled in the same way. It is only on receipt of following packets that the receiver can determine if the connection request is for a normal, main data flow or is secondary, indicating flow in respect of a normal, main data flow.

If a packet is received on a secondary flow that is a request for signalling (s420) to be allowed on a main data flow, then the receiver will check the contents of the packet and compare with the contents stored for previously received connection requests (s425). A request for a secondary flow is identified by examining the contents of the packet. It will have specific fields and values to identify itself and identify to which data flow it pertains, i.e. sender IP address, sender port, sender initial sequence number and receiver initial sequence number. If the details match (s430), then the details are removed from the connection details store (s440). The receiver then sends an acknowledgement to the sender (s445). If the details do not match, the request is ignored (s435).

Once an acknowledgement has been sent, the receiver will then inspect all data packets on the main data flow to see if they contain signalling data (s450). There could be an additional stage here whereby the two computers negotiate how signalling is to be performed. In the flow-chart it is assumed that the method is fixed. This method could be the first X bytes of the payload or could be a series of key-value pairs. Each byte (or sequence of bytes) is examined in turn to see if it is a key. If it is then the following value is read.

Either way, if the main data flow is found (at s450) to contain signalling data, this is extracted from the payload of the data packets (s455) and passed to the relevant application (s460).

In one implementation no more packets are allowed on the secondary flow once the signalling request has taken place. The secondary flow is then closed down.

In the embodiments described above, the main data flow is started first, and a secondary, indicating flow is then attempted afterwards in respect thereof. In alternative embodiments, it is possible for the secondary, indicating flow to be started at the same time as, or before the main data flow in respect of which it is started. An example of an embodiment in which the indicating flow is started first will be briefly described.

The indicating flow starts first. Computer A starts the indicating flow as any other flow (for example using a three-way handshake, in the case of TCP).

The first data packet of the indicating flow may contain data that cannot be processed by the connecting application (so as not to corrupt non-conforming computers). In the case of an http server this may be identified as an extension to http, for example.

The first data packet also contains information on if and/or how signalling information is intended to be passed in the payload of a main data flow. Computer B acknowledges this information.

Computer B is now in a position to look for data in the payload of packets coming in another from Computer A.

Computer A then starts a data flow to Computer B, which will then serve as the main data flow.

It will be apparent that methods according to such embodiments may delay the start of the main data flow, whereas this need not be the case with the more preferable embodiments described earlier.

## Claims

1. A method of communicating between a first node and a second node across a data network, the method comprising, at the second node:
communicating with the first node via a primary communication flow, data in said primary communication flow being capable of interpretation according to a first communication protocol;
receiving data from the first node via a secondary communication flow;
identifying in dependence on the secondary communication flow a protocol change indication, the protocol change indication indicating to the second node that data units being sent via the primary communication flow are capable of interpretation according to a second communication protocol different from the first communication protocol; and
communicating with the first node via the primary communication flow using the second communication protocol;
wherein the primary communication flow comprises data units, one or more of said data units comprising:
- a header portion comprising signalling information according to the first communication protocol; and
- a payload portion comprising data intended to be communicated across the data network in dependence on the signalling information in the header portion;
and wherein interpretation of data units of the primary communication flow according to the second protocol comprises interpretation of at least a part of the data in the payload portion of data units of the primary communication flow as signalling information in respect of said data units of the primary communication flow.

2. A method according to claim 1 wherein interpretation of data units of the primary communication flow according to the first protocol comprises interpretation of data in the header portion of data units of the primary communication flow as signalling information in dependence on which data units of the primary communication flow may be communicated across the data network.

3. A method according to claim 1 or 2 wherein interpretation of data units of the primary communication flow according to the second protocol comprises interpretation of at least a part of the data in the payload portion of data units of the primary communication flow as signalling information in dependence on which data units of the primary communication flow may be communicated across the data network.

4. A method according to claim 1, 2 or 3 wherein the second node is operable to communicate with the first node via a primary communication flow, and subsequently to identify a protocol change indication in dependence on a secondary communication flow in respect of data units being sent via the primary communication flow.

5. A method according to any of the preceding claims, wherein the step of identifying a protocol change indication is performed in dependence on one data unit of the secondary communication flow.

6. A method according to any of the preceding claims, wherein the step of identifying a protocol change indication comprises determining which port at the second node has been used for a connection request in respect of said secondary communication flow, and identifying the protocol change indication in dependence on the identity of that port.

7. A method according to any of the preceding claims, wherein the step of identifying a protocol change indication comprises identifying the protocol change indication in dependence on a relationship between different ports of said first or second nodes used respectively for said primary and secondary communication flows.

8. A method according to any of claims 1 to 7, wherein the step of identifying a protocol change indication comprises identifying that connection requests in respect of said primary and secondary communication flows, received via different ports of the second node, have been received from the same port or related ports of the first node, and identifying the protocol change indication in dependence on such an identification.

9. A method according to any of claims 1 to 7, wherein the step of identifying a protocol change indication comprises identifying that connection requests in respect of said primary and secondary communication flows, received via the same port of the second node, have been received from two different ports of the first node, and identifying the protocol change indication in dependence on such an identification.

10. A method according to any of the preceding claims, wherein the first communication protocol is a first version of a particular communication protocol, and the second communication protocol is a second version of said particular communication protocol, different from the first version of said particular communication protocol.

11. A method according to any of the preceding claims, wherein the first communication protocol is a transport layer protocol according to which data units have a header portion and a payload portion.

12. A method according to any of the preceding claims, wherein the payload portion of a data unit of the primary communication flow comprises a data unit having a header portion according to a protocol at the same layer as the first protocol.

13. Apparatus for performing a method according to any of the preceding claims.
